(19) Europäisches Patentamt
European Patent Office
Office européen des brevets

(11) Publication number: **0 220 430 B1**

# EUROPEAN PATENT SPECIFICATION

(45) Date of publication of patent specification: **13.03.91**

(51) Int. Cl.⁵: **G01N 1/10, G01N 1/14, G01N 1/18**

(21) Application number: **86112115.0**

(22) Date of filing: **02.09.86**

(54) **Sampling apparatus and method.**

(30) Priority: **03.09.85 US 771895**

(43) Date of publication of application:
**06.05.87 Bulletin 87/19**

(45) Publication of the grant of the patent:
**13.03.91 Bulletin 91/11**

(84) Designated Contracting States:
**BE CH DE FR GB IT LI NL SE**

(56) References cited:
US-A- 3 719 086    US-A- 3 756 459
US-A- 3 759 667    US-A- 3 780 590
US-A- 3 912 452    US-A- 4 065 973

(73) Proprietor: **TECHNICON INSTRUMENTS COR-
PORATION(a Delaware corporation)**
**511 Benedict Avenue**
**Tarrytown, New York 10591-6097(US)**

(72) Inventor: **Uffenheimer, Kenneth F.**
**201 Fourth Avenue**
**Pelham New York(US)**

(74) Representative: **Walter, Helmut, Dipl.-Ing.**
**Aubinger Strasse 81**
**W-8000 München 60(DE)**

## Description

This invention relates to new and improved sampling apparatus and method which are capable of automated sampling from both closed and open sample tubes attendant sample analysis.

Although a number of closed tube samplers are known in the prior art, most relevantly in this instance the closed tube sampler included in the hematology instrument as marketed by Coulter Electronics, Inc., Hialeah, Florida as the Coulter "S-PLUS VI," and the closed tube sampler included in the hematology instrument as marketed by Cortex Research Corporation, Northbrook, Illinois under the Trademark "Double Helix;" it may be understood that neither of these prior art closed tube samplers is configured or operable in the manner of the novel sampler of this invention to provide for versatility of application in terms of the immediately available option of automatically switching between closed and open tube sampling through use of simple selector valve means and essentially the same sample supply means without requirement for external modification in sampler configuration; to provide for simplicity of configuration and operation in terms of utilizing essentially the same flow paths for sample supply and for inter-sample sampler rinsing; or to provide for significantly increased sample analysis accuracy in terms of insuring the consistent supply of precisely determined and readily reproducible sample volumes attendant repeated sampling from the same closed sample tube, and in terms of the absolute minimization of sample carryover to levels below those of clinical significance.

Too, and although a particularly wide variety of open tube samplers are known in the prior art, most relevantly in this instance the open tube samplers as disclosed in United States Patents 3,719,086, 3,756,459, 3,759,667, 3,912,452 and 4,065,973, it may be understood that none of these prior art open tube samplers is configured or operable in the manner of the novel sampler of this invention to provide for versatility of application in terms of the immediately available option of switching from open to closed tube sampling; to provide for simplicity of configuration in terms of utilizing essentially the same flow paths for sample supply and for inter-sample sampler rinsing; or to provide for significantly increased sample analysis accuracy in terms of the absolute minimization of sample carryover to levels below those of clinical significance for both open and closed tube sampling.

As disclosed herein, the new and improved sampler apparatus and method of my invention comprise a closed tube sampler, an open tube sampler, sample supply means operatively associated therewith and operable to supply samples therefrom to automated sample analysis apparatus, and selector valve means operatively associated with the closed and open tube samplers, and the sample supply means, and operable to enable selection between the closed and open tube samplers for sample supply to the analysis apparatus. Shear valve means operate to divide the thusly supplied samples into separate sample quantities for concomitant, independent sample quantity analysis by multi-channel sample analysis apparatus. The sample supply means include pressure equalization means which are operable upon closed tube sampler selection and operation to prevent vacuum build-up in the same, thereby insuring consistent sample quantity supply from the closed tube sampler with attendant maximization of the accuracy of the sample analysis results. Rinse means are operatively associated with the closed and open tube samplers, the sample supply means, the selector valve means, and the shear valve means, and are operable to particularly thoroughly rinse and cleanse the same of sample residue between sampling operations, thereby reducing sample carryover to levels below those of clinical significance and further maximizing the accuracy of the sample analysis results.

The advantages of my invention are believed made clear by the following detailed description thereof taken in conjunction with the accompanying drawings wherein:

FIG. I is an essentially diagrammatic view of a new and improved sampler representatively configured and operable in accordance with the teachings of my invention, as depicted in operable relationship with sample analysis apparatus, and includes certain components depicted in cross-section;

FIG. 2 is an essentailly cross-sectional view of the closed tube sampler of FIG. I in a different operational condition;

FIG. 3 is essentially cross-sectional view of the open tube sampler of FIG. I in a different operational condition;

FIG. 4 is an essentially cross-sectional view of the sample valve of FIG. I in a different operational condition;

FIG. 5 is an essentially cross-sectional view of the open tube sampler and selector valve of FIG. I in different operational conditions; and

FIG. 6 is an essentially cross-sectional view of the analysis apparatus reagent valve and metering pump of FIG. I in different operational conditions.

Referring to FIGS. I and 2 of the drawings, a new and improved sampler representatively configured and operable in accordance with the teachings of my invention is indicated generally at I0; and comprises a closed tube sampler as indicated generally at I2, and an open tube sampler as

indicated generally at 14. Sample supply and sampler rinse apparatus are indicated generally at 16, and a sample valve is indicated generally at 18; and a selector valve is indicated generally at 20, and is operable to selectively connect the sample supply and sampler rinse apparatus 16 to either of the closed tube sampler 12 or the open tube sampler 14 for sample supply to the sample valve 18, and subsequent rinse of the latter and of the relevant sampler.

Automated sample analysis apparatus are indicated schematically at 22; and are depicted in operable relationship with the sampler 10 for automated analysis of the samples as supplied thereto from sample valve 18.

A controller is schematically depicted at 24, and is operable to control the operation of the indicated sampler and sample analysis apparatus components as described in greater detail hereinbelow.

The closed tube sampler 12 comprises a closed sample tube holding assembly 26 which includes upper and lower, relatively movable plates 28 and 30. Upper plate 28 includes an upstanding, open-ended generally cylindrical sample tube insertion guide 32 for guidance and support of an inverted, closed sample-containing tube 34 therein as shown. For a representative application of the sampler 10 of my invention, sample tube 34 may, for example, take the form of that marketed under the Trademark "Vacutainer" by the Becton-Dickinson Company of East Rutherford, New Jersey, and will include therein a whole blood sample 36 as aspirated directly thereinto from the arm of a patient and retained therein as shown by a stopper 38 of any appropriately inert and self-sealing material such as a suitable rubber. Tube 34 may be manually inserted into tube insertion guide and support 32, or may be mechanically inserted thereinto by any appropriate tube insertion device, not shown, as well known and understood by those skilled in this art.

A jacketed sampling needle assembly 40, including a sampling needle 41, is fixedly mounted as shown by screw-threaded mounting collar 42 in stepped and internally threaded bore 44 of lower plate 30, and extends upwardly therefrom through aligned bore 46 in upper plate 28 to establish a fluid-tight seal therebetween, albeit with freedom for relative movement. A bore 48 connects bore 46 via vacuum conduit 50 to waste through a suitable source of vacuum, not shown; while a vent bore 52 of small diameter connects bore 46 to atmosphere. Preferably, bore 46 and thus sampling needle 41 are slightly off-center or eccentric relative to tube insertion guide 32 and thus tube stopper 38 for purposes made clear hereinbelow.

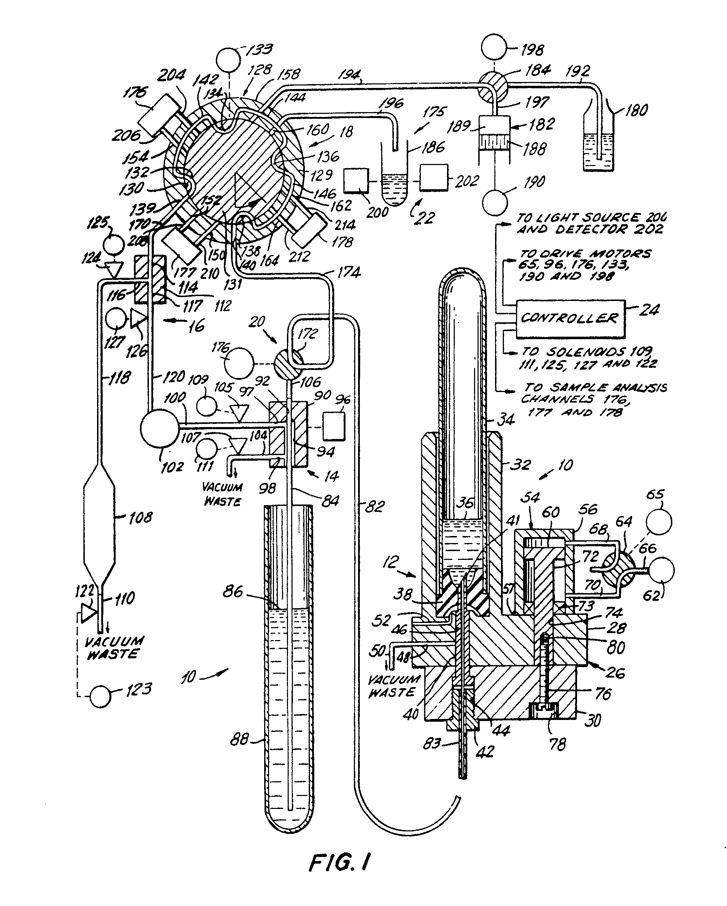

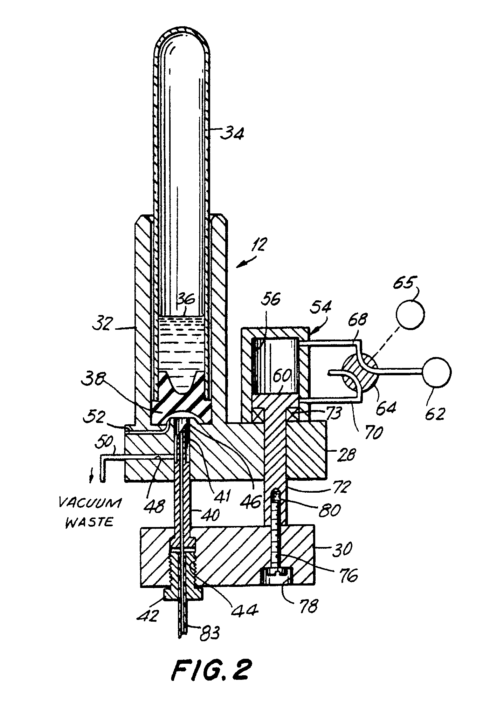

Closed tube holding assembly drive means are indicated generally at 54, and comprise a fluid motor having a cylinder 56 fixedly mounted in any appropriate manner, for example spot welding as indicated at 57, on upper plate 28, and a double-acting piston 60 reciprocatable therein by pressurized fluid from source 62 as supplied to opposite faces of piston 60 through four way valve as schematically indicated at 64 via conduits 66, 68 and 70. Four way valve 64 is preferably operated by an electrically controllable device, for example an electric drive motor as schematically depicted at 65, and is rotatable thereby between the valve positions of FIGS. 1 and 2. A piston rod 72 extends as shown downwardly from piston 60 through sealing means 73 and bore 74 in upper plate 28, and is fixedly secured to lower plate 30 by an attachment screw 76 which extends through stepped bore 78 in the lower plate 30 into threaded bore 80 in the bottom face of piston rod 72.

With closed sample tube holding assembly 26 configured as described, it will be clear that with upper and lower plates 28 and 30 in the abutting or "closed" position thereof of FIG. 1, attendant supply of pressurized fluid from source 62 to cylinder 56 below piston 60 via valve 64 and conduits 66 and 70, sampling needle 40 will be effective to pierce tube stopper 38 and extend into fluid flow communication with sample 36 in closed tube 34 as supported in guide 32. Conversely, with upper and lower plates moved to the separated or "open" position thereof of FIG. 2 through supply of pressurized fluid from source 62 to cylinder 56 above piston 60 via valve 64 and conduits 66 and 68, sampling needle 40 will be withdrawn from stopper 38 and exposed in upper plate bore 46 to vacuum via plate bore 48

A flexible sample supply conduit 82 of any appropriately inert, and preferably transparent, material, for example Teflon, connects jacketed sampling needle 40 via sampling needle connector 83 to selector valve 20.

Open tube sampler 14 comprises an off-take probe 84 which extends as shown into a sample 86 contained in an upstanding open sample tube 88 which is positioned relative thereto as shown in FIG. 1 for withdrawal by aspiration by the probe of a predetermined sample portion therefrom. Tube 88 may be manually presented to probe 84, or may be mechanically presented thereto by any appropriate tube presentation device, not shown, as well known and understood by those skilled in this art. For a representative application of the sampler 10 of my invention, tube 88 may take the form of a "Vacutainer," and sample 86 may again be a whole blood sample as aspirated directly thereinto from the arm of a patient.

A generally cylindrical probe wash sleeve is indicated at 90 and comprises a stepped bore 92 which includes an enlarged bore portion 94 through which probe 84 extends as shown with freedom for relative movement therebetween. A generally fluid-tight seal is formed between probe 84 and the upper portion of bore 92. Wash sleeve 90 further comprises spaced rinse solution and vacuum bores 97 and 98 extending as shown generally transversely thereof into communication with enlarged sleeve bore portion 94. Bore 97 is operable via flexible conduit 100 to supply a pressurized rinse solution from a source 102 thereof to the upper end of bore portion 94; while bore 98 is operable via flexible conduit 104 to connect the lower end of bore portion 94 to waste through a suitable vacuum source, not shown.

Wash sleeve drive means are depicted schematically at 96, and are operatively connected as indicated to wash sleeve 90 to drive the same between the positions thereof of FIGS. I and 3 relative to off-take probe 84; upon removal of course of the open tube 88 from the position thereof depicted in FIG. I. Drive means 96 may, for example, take the form of the electrically controllable fluid motor 54 which forms the closed tube holding assembly drive means; in which instance the motor piston rod would be connected to the wash sleeve 90 to reciprocate the same between the wash sleeve positions of FIGS. I and 3.

Valves taking for example the form of suitable pinch vlaves are indicated schematically indicated at 105 and 107, and are respectively operatively associated with flexible rinse and vacuum conduits 100 and 104 as shown to control fluid flow therethrough. Valves 105 and 107 are prefereably operated by electrically controllable devices, for example solenoids, as indicated schematically at 109 and 111.

A flexible sample supply conduit 106 connects off-take probe 84 to selector valve 20.

Sample supply and sampler rinse apparatus 16 comprise a pressure equilibration chamber 108 which is connected via flexible conduit 110 as indicated to waste through a suitable vacuum source, not shown. An electrically operable conductivity detector is schematically depicted at 112, and includes interconnected flow passages 114, 116 and 117 extending therethrough as shown. A flexible conduit 118 connects conductivity detector passage 116 to equilibration chamber 108, and a flexible conduit 120 connects conductivity detector flow passage 117 to pressurized rinse source 102. As well known and understood by those skilled in this art, conductivity detector 112 is operable to detect the presence of sample fluids in passages 114 and 117, on the basis of the resultant conductivity changes thereacross, and to generate and output an electrical signal indicative thereof.

Valves taking the form of pinch valves are

schematically depicted at 122, 124 and 126, and are respectively operatively associated as shown with flexible conduits 110, 118 and 120 to control fluid flow therethrough. Valves 122, 124 and 126 are preferably operated by electrically controllable devices, for example solenoids, as schematically depicted at 123, 125 and 127, respectively.

The sample valve 18 takes the form of a shear valve 128 which comprises a stationary, generally cylindrical outer valve body part 129 having a bore 130 formed therein, and a generally cylindrical inner valve body part 131 disposed as shown in generally fluid-tight manner in bore 130 and rotable relative thereto between the positions thereof of FIGS. I and 4 by operatively connected electrically operated drive means preferably taking the form of an electric drive motor as schematically depicted at 133. Inner valve body part 131 comprises spaced sample fluid loops or passages 132, 134, 136 and 138 formed therein as shown; while outer valve body part 129 comprises sample fluid passages 139 and 140, and spaced sample fluid loops or passages 142, 144 and 146 which are respectively precisely alignable with inner valve body loops 12, 134, 136 and 138 to form a continuous sample fluid passage extending through the sample valve from outer valve body passages 139 to 140 when the sample valve is in the position thereof as depicted in FIG. I.

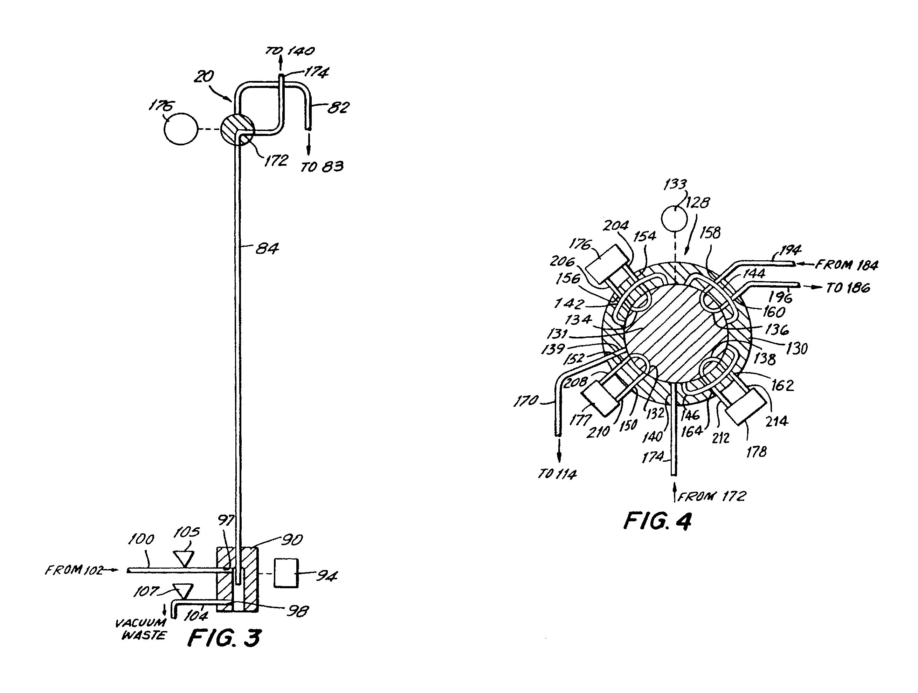

Further included in the outer valve body part 129 of the shear valve 128 are spaced fluid passage pairs 150 and 152, 154 and 156, 158 and 160, and 162 and 164, which are respectively precisely alignable as shown with inner valve body part loops 132, 134, 136 and 138 with inner valve body part 131 rotated to the FIG. 4 position thereof by drive motor 133 to form four discrete sample fluid flow passages extending through the valve, none of which are in fluid folow communication with closed or open tube samplers 12 and 14 or with the sample and sampler rinse supply apparatus 16.

A flexible conduit 170 connects outer valve body passage 139 to flow passage 114 in conductivity detector 112.

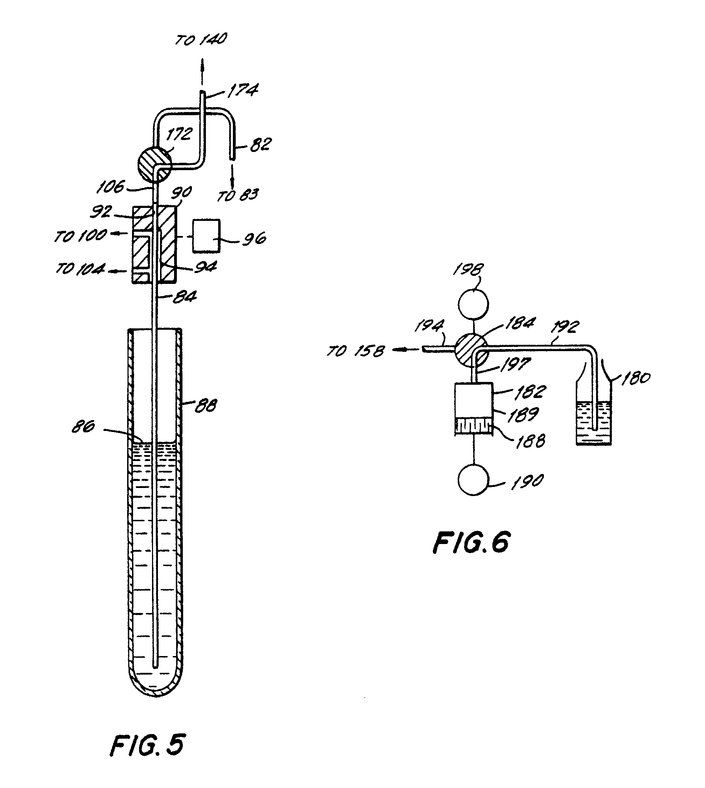

Selector valve 20 comprises a three way valve as schematically depicted at 172 which is connected as shown by flexible conduit 174 to passage 140 of shear valve 128. Three way valve is rotatable between the positions thereof of FIG. I and FIGS. 3 and 5 by operatively connected, electrically operated drive means taking, for example, the form of an electric drive motor as schematically depicted at 176. with the three way valve 172 in the position thereof of FIG. I, it will be clear that closed tube sampler 10 will be operatively connected therethrough to shear valve 128 via conduits 82 and 174; while open tube sampler 14 will be effectively disconnected -and isolated from the sample supply circuit of the sampler apparatus 10. Conversely,

with the three way valve 172 in the position thereof of FIG. 5, it will be clear that the open tube sampler 14 will be operatively connected therethrough to shear valve 128 via conduits 106 and 174; while closed tube sampler 12 will be effectively disconnected and isolated from the sample supply circuit of the sampler apparatus 10.

For use with a sample valve 18 taking the form of shear valve 128 which is operable as depicted and described to form four separate and discrete sample loops 132, 134, 136 and 138 with the inner valve body part 131 rotated by drive motor 133 to the position thereof of FIG. 4, it will be clear to those skilled in this art that the sample analysis apparatus 22 may advantageously include four discrete, albeit concomitantly operable, automated sample analysis channels operatively associated with said shear valve on the basis of one of said sample analysis channels for each of said sample loops. One of these sample analysis channels, as indicated generally at 175, is representatively depicted in some detail, albeit schematically, in FIG. 1; while the remaining three of such sample analysis channels are depicted in block diagram form at 176, 177 and 178, all in operative relationship with the shear valve 128.

As schematically depicted in FIG. 1, automated sample analysis channel 175 comprises a reagent-(s) source 180, a reagent metering pump 182, a three way reagent valve 184, and a sample-reagent reaction and analysis chamber 186. Reagent metering pump 182 comprises a piston 188 which is reciprocatable in a cylinder 189 by an electric drive motor 190. A flexible conduit 192 connects reagent-(s) source 180 to reagent valve 184; while flexible conduits 194 and 196 respectively connect reagent valve 184 and reaction and analysis chamber 186 to passages 158 and 160 in shear valve 128, thus effectively connecting sample analysis apparatus channel 175 to shear valve sample loop 136 when the shear vlalve 128 is in the FIG. 4 position thereof. A flexible conduit 197 connects reagent metering pump 182 to three way valve 184; while electrically controllable drive means, preferably taking the form of an electric drive motor as depicted schematically at 198 are operatively connected as indicated to reagent valve 184 and are operable to rotate the same between the positions thereof of FIG. 1 and FIG. 6 to either connect reagent pump 182 to source 180 or to the shear valve 128. Further included in automated sample analysis channel 175 are sample anlysis means taking, for example, the form of a light source 200, such as a laser, and a lightsensitive detector 202, respectively operatively associated with sample-reagent reaction and analysis chamber 186 and operable to automatically analyze reacted samples as contained therein in manner(s) well known and understood by those skilled in this art.

Flexible conduits 204 and 206, 208 and 210, and 212 and 214, are provided to respectively connect sample analysis apparatus channels 176, 177 and 178 as shown to shear valve sample loops 134, 132 and 138 when the inner valve body part 131 is rotated to the position thereof of FIG. 4; and it will be clear that the respective sample analysis apparatus channels 176, 177 and 178 may take any of a wide variety of configurations compatible with automated sample analysis.

Controller 24 may, for example, take the form of an appropriately programmable microprocessor device which is operable as indicated through non-illustrated power supply devices to electrically control, i.e. start, stop, sequence and time, the respective operations of the sampler and sample analysis apparatus components as indicated on FIG. 1 of the drawings.

For operation of the sampler 10 of my invention to supply a sample from closed tube sampler 12 to sample analysis apparatus 22, and with no tube 34 initially in place in tube insertion and support guide 32, it will be understood that controller 24 would be activated to open pinch valve 124, close pinch valves 122, 126, 105 and 107, and position shear valve 128, three way valve 172 and four way valve 64 as depicted in FIG. 1. This effectively isolates open tube sampler 14 from the sampler 10, and brings tube holding assembly 26 to the "closed" position thereof of FIG. 1; and insures ambient atmospheric pressure in equilibration chamber 108 via the open and exposed tip of sampling needle 41 through the relevant connected conduits and fluid passages. Concomitantly, controller 24 operates to drive reagent valve 184 to the FIG. 6 position thereof, and to drive reagent metering pump piston 188 downwardly as shown to bottom dead center to aspirate reagent(s) from source 180 via conduit 192 and charge pump cylinder 189 therewith.

Closed sample tube 34 with stopper 38 firmly in place is then manually inserted into tube insertion guide 32 and forced downwardly until the stopper abuts and comes to rest at the upper surface of plate 28. This results in needle 41 piercing stopper 38 and extending as shown into fluid flow communication with sample 36. Under these circumstances, it will be clear that vacuum build-up in closed tube 34 above sample 36, as might otherwise develop attendant repetitive sample aspiration from the same closed sample tube, will be advantageously eliminated by the flow of the necessary quantity of air at ambient atmospheric pressure from the equilibration chamber 108 to the interior of closed tube 34 above the sample 36 via the open end of needle 41; it being understood by those skilled in this art that vacuum build-up of the nature under discussion in closed tube 34 could very well result in the formation and inclusion of micro-bubbles in sample(s) as aspirated therefrom with attendant reduction in the overall quantity of sample available for analysis, and significant and contemporarily unacceptable degradation in sample analysis accuracy. The problem of micro-bubble formation in aspirated sample(s) is of particular concern in contemporary sample analysis apparatus wherein increasingly small quantities, for example 100 micro-liters, of sample are aspirated for supply to sample analysis apparatus, and wherein the accuracy of the sample analysis results are closely predicated upon the availability in each instance of a precisely known sample quantity for analysis; in this instance the respective sample quantities as contained in shear valve loops 132, 134, 136 and 138 as described in detail hereinbelow. Too, in those instances wherein closed tube 34 is constituted by a "Vacutainer," and wherein a short "pull" from a patient results in significantly less than an optimal quantity of blood sample available therein for analysis, it will be clear to those skilled in this art that the addition of air at ambient atmospheric pressure to closed tube 34 as described above sample 36 may prove essential as a practical matter to permit satisfactory sample aspiration therefrom.

Following pressure equilibration as above between equilibration chamber 108 and closed sample tube 34 --this in reality is accomplished almost instantaneously upon the entry of sampling needle into the closed tube-- controller 24 operates to open pinch valve 122, thus connecting the relevant vacuum source through conduit 110 to sampling needle 41, whereby sample 36 will be aspirated from closed tube 34 via needle 41, connector 83, conduit 82, valve 172 and conduit 174 to flow into and through and fill connected shear valve passages and loops 140, 138, 146, 136, 144, 134, 142, 132 and 139, and to flow from the latter via conduit 170 into passage 114 of conductivity detector 112. Upon the arrival and detection of the leading edge of the thusly aspirated sample in the conductivity detector 112, the latter will operate to signal controller 24 to close pinch valve 124 to discontinue sample aspiration from closed tube 34.

Controller 24 then operates to rotate the inner body part 131 of shear valve 128 to the FIG. 4 position thereof, thus effectively shearing the sample-filled flow passage through valve 128 into four discrete, and precisely volumetrically determined, sample segments as respectively contained in shear valve loops 136, 134, 132 and 138 which are now respectively placed in fluid flow communication with sample analysis apparatus channels 175, 176, 177 and 178 via valve passages 158 and 160 and conduits 194 and 196, valve passages 154 and 156 and conduits 204 and 206, valve passages 152 and

150 and conduits 208 and 210, and valve passages 164 and 162 and conduits 212 and 214.

For sample analysis by sample analysis apparatus channel 175, controller 24 then operates to return reagent valve 184 to the FIG. 1 position thereof and to drive reagent metering pump piston 188 to top dead center to pump a precisely metered reagent quantity into conduit 194 through valve 184, thus inserting the sample contained in shear valve loop 136 into the reagent flow path formed by conduit 194, valve passage 158, loop 136, valve passage 160 and conduit 196, and flushing the resultant sample-reagent solution into reaction and analysis chamber 186 for thorough sample-reagent mixing and reaction, and automated sample analysis attendant subsequent activation by controller 24 of light energy source 200 and detector 202. Controller 24 then returns reagent valve 184 to the FIG. 6 position thereof for re-charging as described of reagent pump 182 with reagent from source 180.

Sample analysis apparatus channels 176, 177 and 178, which may be of the same or different configurations than analysis channel 175, are concomitantly operated by contoller 24 to acquire, react (if required), and analyze the respective sample quantities from shear valve loops 134, 132 and 138.

Controller 24 then operates to return shear valve 128 to the FIG. 1 position thereof thus re-establishing the continuous flow path therethrough; and to rotate four way valve 64 to the FIG. 2 position thereof, thereby operating fluid motor 54 to drive the closed tube holding assembly 26 to the "open" position thereof of FIG. 2. This retracts the tip of sampling needle 41 into bore 46 in upper plate 28, thereby exposing the same to vacuum via the now uncovered vacuum bore 48 and conduit 50.

Particularly thorough rinsing and cleansing of the sample-contaminated flow path from the open tip of needle 41 to and through the shear valve 128 to minimize sample carryover, e.g. the contamination of a succeeding sample by the residue of a preceding sample, and maximize the accuracy of subsequent sample analysis, is then initiated by the re-opening of pinch valve 124 via controller 24 to re-connect the sampling needle 41 to the relevant vacuum source and thereby aspirate the vast bulk of the sample remaining in needle 41, connector 83, conduit 82, three way valve 172, conduit 174, shear valve passages and loops 140, 138, 146, 136, 144, 134, 142, 132 and 139, conduit 170, and conductivity detector passage 114 to waste through conductivity detector passage 116, conduit 118, equilibration chamber 108 and conduit 110, respectively. Of course, the atmospheric air required by this aspiration of remaining sample to waste is provided by vent bore 52 in the upper plate 28 of the closed tube holding assembly 26. Controller 24 then operates to close pinch valve 124 and open pinch valve 126, thereby providing for the forceful flow of pressurized rinse solution from source 102, through conduit 120, conductivity detector passages 117 and 114, conduit 170, the above-specified connected shear valve passages and loops, conduit 174, three way valve 172, conduit 82, connector 83 and jacketed sampling needle 40, respectively, to waste via bore 46, vacuum bore 48 and conduit 50. This results in the particularly effective and thorough rinsing and cleansing, by forceful rinse solution back flushing as described, of the entire sample sample supply path from the tip of sampling needle 41 to and through the shear valve 128; and, in addition, results in like manner in the particularly thorough rinsing and cleansing of the exposed outer surface of the tip of sampling needle 41 as the rinse solution flows from the open needle tip downwardly and completely around that surface on its way to vacuum bore 48.

Controller 24 then operates to re-close pinch valve 126 and re-open pinch valve 124, thereby discontinuing pressurized rinse solution supply, evacuating the rinse solution from the entire sample supply path of interest to waste via conduit 110, and subsequently effectively air-drying that entire sample supply path and the exposed outer surface of the sampling needle tip. Thus, all relevant sampler and valve components are left essentially clean and dry, sample carryover with regard to a succeeding sample reduced to an absolute and clinically insignificant minimum, and the accuracy of succeeding sample analysis results maximized.

Closed sample tube 34 is manually removed from tube insertion and support guide 32 on the tube holding assembly 26 at or before the completion of the rinsing and drying operation.

At the completion of the rinsing and drying operation, controller operates to re-close pinch valve 122 and return four way valve 64 to the FIG. 1 position thereof, thus again effectively insuring ambient atmospheric pressure in the equilibration chamber 108, and returning the closed tube holding assembly 26 to the "closed" position thereof of FIG. 1 in readiness for repetition of the closed tube sampling and analysis cycle as described.

Sampling needle 41 is disposed somewhat off-center vis-a-vis closed tube insertion and support guide 32 to reduce from virtual certainty the probability attendant subsequent re-introduction of the same closed sample tube 34 to closed tube sampler 12 that needle 41 will pierce the tube stopper 38 at precisely the same location, thereby unduly weakening the latter and introducing the unacceptable possibility of leakage at the point where the needle pierces the stopper.

For operation of the sampler 10 of my invention to supply a sample from open tube sampler 14 to sample analysis apparatus 22 for analysis, and with a sample-containing open tube 88 presented as depicted in FIG. 1 to immerse off-take probe 84 in the sample 86 and wash sleeve 90 positioned as in FIG. 1, it will be understood that controller 24 would be activated to close pinch valves 105, 126 and 107, open pinch valves 124 and 122, and position three way valve 172 and shear valve 128 as in FIG. 1. This effectively isolates closed tube sampler 12 from the sampler 10, and results in the aspiration and flow under the influence of the relevant vacuum source of the sample 86 from open tube 88 via the open end of off-take probe 84, conduit 106, three way valve 172, conduit 174, the above-specified connected passages and loops of shear valve 128, and conduit 170, into passage 114 of the conductivity detector 112, respectively, thus again resulting in the filling of the shear valve sample loops 138, 136, 134 and 132 with sample. Concomitantly, controller 24 would operate sample analysis channel 175 to charge reagent metering pump 182 with reagent(s) as described hereinabove.

Upon detection of the leading edge of sample 86 in conductivity detector passage 114, the detector will signal controller 24 to close pinch valve 124, thus discontinuing further sample aspiration from open tube 88, and to rotate shear valve 128 to the FIG. 4 position thereof. Sample analysis channels 175, 176, 177 and 178 are then operated by controller 24 to acquire, react (if required in all instances), and automatically analyze the respective sample quantities from shear valve loops 136, 132, 134 and 138, all as described in some detail hereinabove with regard to the operation of the closed tube sampler 12; and open sample tube 88 is removed from registration with the off-take probe 84.

Following sample quantity acquisition as described by analysis apparatus 22, controller 24 operates to rotate shear valve 128 back to the FIG. 1 position thereof, thus re-establishing the continuous flow path therethrough, and to re-open pinch valve 124 to aspirate to waste most of the sample 86 remaining in the probe 84, conduit 106, selector valve 172, conduit 174, and the re-connected shear valve passages and loops, respectively, through conduit 170, detector passages 114 and 116, conduit 118, chamber 108 and conduit 110. Concomitantly, controller 24 operates to open pinch valves 105 and 107, thus forcefully introducing the pressurized rinse solution from source 102 via conduit 100 and wash sleeve bore 97 at the top of wash sleeve bore portion 94 to surround and forcefully contact the outer surface of the off-take probe 84, and withdrawing the thusly introduced rinse solution from the bottom of wash sleeve bore portion 94 to waste through sleeve vacuum bore 98 and conduit 104. Controller 24 now also operates to actuate wash sleeve drive motor 96 to drive the thusly operating wash sleeve from the FIG. I to FIG. 3 position thereof, thus effectively causing the operating wash sleeve to traverse substantially the entire outer surface of the off-take probe 84 thereby thoroughly rinsing the same and removing therefrom the residue of the sample 86 therefrom.

As the wash sleeve 90 reaches the FIg. 3 position thereof, it will be understood that the vacuum existing in the tip portion of probe 84 will operate to aspirate the rinse solution from wash sleeve rinse solution bore 97, as mixed of necessity with some measure of ambient atmospheric air, into the open probe tip for flow following the remaining sample as described to waste via conduit IIO. As well understood by those skilled in this art, this flowing mixture of air, in the form of air bubbles, and the rinse solution, will have a particularly effective cleansing action on the interior of probe 84, conduit I06, selector valve I72, conduit I04, and the relevant connected passages and loops of shear valve I28 with regard to the particularly thorough removal of the residue of sample 86 therefrom.

Controller 24 then operates to close pinch valves I05 and I24, and to open pinch valve I26, thereby discontinuing rinse solution supply to the wash sleeve 90, and commencing rinse solution supply to the probe 84 via conduit I20, detector passages II7 and II4, conduit I70, the relevant connected passages and loops of shear valve I28, conduit I74, selector valve I72, conduit I06 and probe 84, thereby backflushing the same with rinse solution against the direction of sample flow therein for additional, particularly thorough and effective cleansing thereof with regard to the residue of sample 86. As this backflushing rinse solution exits the tip of probe 84, the same is simply aspirated to waste via wash sleeve vacuum bore 98 and conduit I04, thus preventing contaminated rinse solution spillage at the situs of operation of sampler I0. Of particular significance with regard to probe backflushing in instances wherein the sample(s) of interest are constituted by whole blood samples is the demonstrated effectiveness of the same with regard to removal of otherwise difficult-to-remove fibrinogen, or clotted blood fibrin materials.

At the completion of probe and sample supply means backflushing as described, controller 24 operates to close pinch valve I26 and open pinch valve I24 to aspirate the rinse solution remaining in the probe 84, conduit I06, selector valve I72, conduit I74, the relevant connected passages and loops of shear valve I28, to waste via conduit I70, detector passages II4 and II6, conduit II8, chamber I08 and conduit IIO, respectively, thus effectively again flushing the same with rinse solution in the direction of sample flow to complete the particularly thorough cleansing thereof with rinse solution vis-a-vis the residue of sample 86. Ambient atmospheric air will, of course, be aspirated into probe 84 following the aspiration of the remaining rinse solution therefrom as described to waste to air-dry the same, and all other relevant sampler components, to complete the cleansing thereof. Concomitantly, controller 24 operates to actuate wash sleeve drive motor 96 to return the wash sleeve 90 to the FIG. I position thereof, thus effectively air-drying the same due to the flow of ambient atmospheric air around the probe into wash sleeve vacuum bore 98, to thus complete the cleansing of the probe exterior.

At the completion of the above, controller 24 operates to re-close pinch valves I22 and I07 to prepare open tube sampler I4 for a succeeding cycle of operation as described upon presentation of another open sample-containing tube to the off-take probe 84 as described.

Although disclosed hereinabove as stationary relative to upper closed tube holding assembly plate 28, it will be clear that tube insertion and support guide 34 may be moveable relative thereto taking, for example, the form of a plurality of such tube insertion and support guides as may be disposed in manner well understood by those skilled in this art on a turntable or like device and which are indexable in turn into the depicted operational position for sampling in turn from the closed sample-containing tubes as inserted and supported therein.

Although disclosed hereinabove by way of representative example as applied to the sampling and analysis of blood samples, it will be clear to those skilled in this art that the apparatus and method of my invention are by no means limited to use with samples as constituted by blood.

Various changes may, of course, be made in the hereindisclosed preferred embodiment of my invention without departing from the scope thereof as defined by the appended claims.

## Claims

1. Sampler apparatus for supplying samples to sample analysis apparatus and comprising, a closed tube sampler (12), an open tube sampler (14), sample supply means (16) operatively associated with said closed tube sampler (12) and said open tube sampler (14) and operable to supply samples as provided thereto by said samplers (13, 14) to sample analysis apparatus (22), and selector valve means (20) operatively associated with said closed tube sampler (12), said open tube sampler (14), and said sample supply means (16), respectively, and operable to select between said closed tube sampler (12) and said open tube sampler (14) for the provision of samples to said sample supply means (16).

2. Sampler apparatus as in Claim 1 further comprising, rinse means (16) operatively associated with said closed tube sampler (12), said open tube sampler (14), said sample supply means (16), and said selector valve means (20), respectively, and operable to rinse said closed tube sampler (12), said open tube sampler (14), and said sample supply means (16), said selector valve means (20). being further operable to select between said closed tube sampler (12) and said open tube sampler (14) for rinse by said rinse means (16).

3. Sampler apparatus as in Claims 1 or 2 further comprising, means (18) operatively associated with said sample supply means (16) and said rinse means (16), and operable to divide samples as supplied thereto by said sample supply means (16) into separate sample quantities for independent sample quantity analysis, said rinse means (16) being operable to rinse said sample dividing means (18) attendant the rinse of said sample supply means (16).

4. Sampler apparatus as in Claims 1, 2 or 3 which include means to supply samples from a closed sample container (34) by introducing sample aspiration means (40) thereinto, said sample supply means (16) including, means operatively associated with said sample aspiration means (40) and operable upon the introduction thereof into said closed sample container (34) to equalize the pressure in said container (34) with ambient atmospheric pressure prior to sample aspiration, thereby inhibiting vacuum build-up in said closed sample container (34) upon the aspiration of samples therefrom, said pressure equalization means comprising a pressure equilibration chamber (108) operatively connected to said sample aspiration means (40), said sampler apparatus further comprising, means to supply samples from an open sample container (88) by introducing sample aspiration means (84) thereto, and selector means (20) operatively associated with said closed and open sample container sample supply means (16) and operable to select therebetween for sample supply from said sampler apparatus.

5. Sampler apparatus as in any one of claims, 2 - 4 further including means (54) to remove said sample aspiration means (40) from said closed sample container (34) following sample aspiration, and said rinse means (16) operatively connected to said sample supply means (16) and operable upon the removal of said sample aspiration means (40) from said closed sample container (34) following sample aspiration therefrom to flow a rinse through said sample supply means (16) and said sample aspiration means (40) against the direction of aspirated sample flow therethrough, thereby backflushing said sample supply means (16) and said sample aspiration means (40) to remove aspirated sample residue therefrom, said sample aspiration means (40) comprise a sampling needle (41), and wherein said rinse means (16) are operable to flow said rinse solution through the interior of said sampling needle (41) and around the exterior thereof to remove aspirated sample residue from both the interior and exterior of said sampling needle (41) and wherein said sampling needle (41) is generally vertically oriented upon the flow of said rinse solution therethrough.

6. Sampler apparatus as in any one of claims 4 or 5 wherein said sample supply means (16) are further operable to flow said rinse therefrom and from said sample aspiration means (40) in the direction of aspirated sample flow therethrough, thereby flushing said sample supply means (16) and said sample aspiration means (40) to remove aspirated sample residue therefrom.

7. Sampler apparatus as in any one of claims 4 to 6 wherein said container (34) comprises a generally circular stopper (38) closing the same, and said sampling needle (41) is operable to pierce said stopper (38) for sample aspiration from said container (34), said sampling needle (41) being disposed off-center relative to said container stopper (38) whereby said sampling needle (41) will not pierce the center of said stopper (38) attendant sample aspiration from said container.

8. Sampler apparatus as in any one of claims 2 to 7 wherein said rinse means (16) are operatively connectable by said selector means (24) to said open sample container sample supply (16) and sample aspiration means (84), said rinse means (16) being operable upon such connection following sample aspiration from said open sample container (88) to flow a rinse through said open sample container sample supply (16) and sample aspiration means (84) against the direction of aspirated sample flow therethrough, thereby backflushing said open sample container sample supply (16) and sample aspiration means (84) to remove aspirated sample residue therefrom.

9. Sampler apparatus as in any one of claims 4 to 8 wherein said sample supply means (16) are further operable to flow said rinse therefrom and from said open sample container sample aspiration means (84) in the direction of aspirated sample flow therethrough, thereby flushing said sample supply (16) and open sample container sample aspiration means (84) to remove aspirated sample residue therefrom.

10. Sampler apparatus as in any one of claims 4 to 9 wherein said open sample container sample aspiration means (84) comprise a probe (84), and wherein said rinse means (16) further comprise means operatively associated with said probe (84) and operable to rinse the exterior thereof to remove aspirated sample residue therefrom.

11. Sampling method for supplying samples to sample analysis apparatus through use of sampler apparatus which comprise a closed tube sampler, an open tube sampler, and sampler rinse means, the steps of, selecting between said closed tube sampler and said open tube sampler for sample supply to said sample analysis apparatus, and selecting between said closed tube sampler and said open tube sampler for subsequent rinse by said sampler rinse means to remove sample residue therefrom.

12. A method as in Claim 11 wherein said sampler apparatus include sample dividing means, and said method further comprises, the steps of, dividing said sample into separate sample quantities, supplying said separate sample quantities for independent sample quantity analysis, and rinsing said sample dividing means to remove sample residue therefrom.

13. A method as in Claims 11 or 12, of supplying a sample from a closed sample container by the introduction of sample aspiration means thereinto, said method further comprising the steps of, equalizing the pressure in said closed sample container with ambient atmospheric pressure prior to sample aspiration therefrom, thereby preventing vacuum build-up in said closed sample container.

14. A method as in Claims 11, 12 or 13, of supplying a sample from a closed sampler container by the introduction of sample aspiration means thereinto to withdraw said sample therefrom, and subsequently removing said sample aspiration means from said closed sample container, said method further comprising the steps of, flowing a rinse through said sample aspiration means against the direction of aspirated sample flow therethrough, thereby backflushing said sample aspiration means to remove aspirated sample residue therefrom, and subsequently flowing said rinse through said sample aspiration means in the direction of aspirated sample flow therethrough, thereby flushing said sample aspiration means to remove aspirated sample residue therefrom, and subsequently flowing ambient atmospheric air through said sample aspiration means, thereby air-drying the same to complete the cleansing thereof.

15. A method as in either of claims 13 or 14 wherein said sample aspiration means comprise a sampling needle, and wherein the step of backflushing said sample needle with said rinse further comprises, the step of, flowing said rinse from the interior of said sampling needle around the exterior thereof, thereby removing aspirated sample residue from both the interior and exterior of said sampling needle.

16. A method as in Claims 11 or 12 of supplying a sample from an open sample container by the introduction of sample aspiration means thereinto to withdraw said sample therefrom, and the subsequent removal of said sample aspiration means from said open sample container, the steps of, flowing a rinse through said sample aspiration means in the direction of aspirated sample flow therethrough thereby flushing said sample aspiration means to remove aspirated sample residue therefrom, and subsequently flowing a rinse through said sample aspiration means against the direction of aspirated sample flow therethrough thereby backflushing said sample aspiration means to remove aspirated sample residue therefrom.

17. A method as in Claim 16 wherein said sample aspiration means comprise a probe further comprising, the steps of, subsequently flowing a rinse through said sample aspiration means in the direction of aspirated sample flow therethrough, thereby flushing said sample aspiration means to remove aspirated sample residue therefrom, and backflushing said probe comprise the flow of said rinse through the interior of said probe, and said method further includes, the steps of, rinsing the exterior of said probe to remove aspirated sample residue therefrom, and subsequently flowing ambient atmospheric air through said sample aspiration means and around the exterior of said probe, thereby air-drying the same to complete the cleansing thereof.

18. A method as in Claims 16 or 17 wherein, the step of flowing said rinse through said sample aspiration means in the direction of aspirated sample flow therethrough to flush the same further comprises, the steps of, mixing ambient atmospheric air with said rinse for flow through said sample aspiration means, thereby increasing the effectiveness of the removal of aspirated sample residue therefrom.

**Revendications**

1. Appareil échantillonneur pour l'introduction d'échantillons dans un appareil d'analyse d'échantillons et comprenant un échantillonneur (12) a tube fermé, un échantillonneur (14) à tube ouvert, des moyens (16) d'introduction des échantillons, associés de façon fonctionnelle audit échantillonneur (12) à tube fermé et audit échantillonneur (14) à tube ouvert, et actionnables pour introduire des échantillons tels qu'ils leur sont adressés par lesdits échantillonneurs (13,14) à l'appareil (22) d'analyse des échantillons, et des moyens (20) à soupape de sélection, associés de façon fonctionnelle respectivement audit échantillonneur (12) à tube fermé, audit échantillonneur (14) a tube ouvert, et auxdits moyens (16) d'introduction des échantillons, et actionnables pour choisir entre ledit échantillonneur (12) à tube fermé et ledit échantillonneur (14) à tube ouvert pour adresser des échantillons auxdits moyens (16) d'introduction des échantillons.

2. Appareil échantillonneur tel que défini à la revendication 1, comprenant en outre des moyens de rinçage (16), associés de façon fonctionnelle respectivement audit échantillonneur (12) à tube fermé, audit échantillonneur (14) à tube ouvert, auxdits moyens (16) d'introduction des échantillons, et auxdits moyens (20) à soupape de sélection, et actionnables pour rincer ledit échantillonneur (12) à tube fermé, ledit échantillonneur (14) à tube ouvert, et lesdits moyens (16) d'introduction des échantillons, lesdits moyens (20) à soupape de sélection étant en outre actionnables pour choisir entre ledit échantillonneur (12) à tube fermé et ledit échantillonneur (14) à tube ouvert en vue du rinçage par lesdits moyens de rinçage (16).

3. Appareil échantillonneur tel que défini aux revendications 1 ou 2, comprenant en outre des moyens (18), associés de façon fonctionnelle auxdits moyens (16) d'introduction des échantillons et auxdits moyens de rinçage (16), et actionnables pour diviser des échantillons tels qu'ils leur sont adressés par lesdits moyens (16) d'introduction des échantillons en quantités d'échantillon séparées pour des analyses indépendantes des quantités d'échantillon, lesdits moyens de rinçage (16) étant actionnables pour rincer lesdits moyens (18) de division des échantillons lors du rinçage desdits moyens (16) d'introduction des échantillons.

4. Appareil échantillonneur tel que défini aux revendications 1, 2 ou 3, qui comprend des moyens pour introduire des échantillons provenant d'un récipient d'échantillon fermé (34) par introduction dans celui-ci de moyens (40) d'aspiration des échantillons, lesdits moyens (16) d'introduction des échantillons comprenant des moyens associés de façon fonctionnelle auxdits moyens (40) d'aspiration des échantillons et actionnables lors de l'introduction de ceux-ci dans ledit récipient d'échantillon fermé (34) pour égaliser la pression dans ledit récipient (34) avec la pression atmosphérique ambiante avant l'aspiration des échantillons, inhibant ainsi l'accumulation de vide dans ledit récipient d'échantillon fermé (34) lors de l'aspiration des échantillons à partir de celui-ci, lesdits moyens d'égalisation de pression comprenant une chambre (108) d'équilibrage de pression, connectée de façon fonctionnelle auxdits moyens (40) d'aspiration des échantillons, ledit appareil échantillonneur comprenant en outre des moyens pour introduire des échantillons provenant d'un récipient d'échantillon ouvert (88) par introduction dans celui-ci de moyens (84) d'aspiration des échantillons, et des moyens sélecteurs (20) associés de façon fonctionnelle auxdits moyens (16) d'introduction des échantillons des récipients d'échantillon ouvert et fermé, et actionnables pour choisir entre eux pour l'introduction des échantillons a partir dudit appareil échantillonneur.

5. Appareil échantillonneur tel que défini à l'une des revendications 2-4, comprenant en outre des moyens (54) pour retirer lesdits moyens (40) d'aspiration des échantillons hors dudit récipient d'échantillon fermé (34) après l'aspiration des échantillons, et lesdits moyens de rinçage (16) connectés de façon fonctionnelle auxdits moyens (16) d'introduction des échantillons et actionnables lors du retrait desdits moyens (40) d'aspiration des échantillons hors dudit récipient d'échantillon fermé (34) après l'aspiration des échantillons hors de celui-ci pour faire s'écouler une solution de rinçage à travers lesdits moyens (16) d'introduction des échantillons et lesdits moyens (40) d'aspiration des échantillons, à l'encontre de la direction de l'écoulement a travers eux des échantillons aspirés, réalisant ainsi un rinçage à contre-courant desdits moyens (16) d'introduction des échantillons et desdits moyens (40) d'aspiration des échantillons pour en éliminer le résidu des échantillons aspirés, lesdits moyens (40) d'aspiration des échantillons comprenant une aiguille d'échantillonnage (41), et dans lequel lesdits moyens de rinçage (16) sont actionnables pour faire s'écouler ladite solution de rinçage a travers l'intérieur de ladite aiguille d'échantillonnage (41) et autour de l'extérieur de celle-ci pour éliminer le résidu des échantillons aspirés a la fois de l'intérieur et de l'extérieur de ladite aiguille d'échantillonnage (41), et dans lequel ladite aiguille d'échantillonnage (41) est orientée généralement verticalement lors de l'écoulement de ladite solution de rinçage à travers elle.

6. Appareil échantillonneur tel que défini à l'une des revendications 4 ou 5, dans lequel lesdits moyens (16) d'introduction des échantillons sont en outre actionnables pour faire s'écouler ladite solution de rinçage à partir d'eux et à partir desdits moyens (40) d'aspiration des échantillons dans la direction de l'écoulement à travers eux des échantillons aspirés, rinçant ainsi lesdits moyens (16) d'introduction des échantillons et lesdits moyens (40) d'aspiration des échantillons pour en éliminer le résidu des échantillons aspirés.

7. Appareil échantillonneur tel que défini à l'une des revendications 4 à 6, dans lequel ledit récipient (34) comprend un bouchon (38) généralement circulaire, fermant ce dernier, et ladite aiguille d'échantillonnage (41) est actionnable pour percer ledit bouchon (38) en vue de l'aspiration d'un échantillon hors dudit récipient (34), ladite aiguille d'échantillonnage (41) étant disposée de façon excentrée par rapport audit bouchon (38) du récipient, ce par quoi ladite aiguille d'échantillonnage (41) ne percera pas le centre dudit bouchon (38) lors de l'aspiration d'un échantillon hors dudit récipient.

8. Appareil échantillonneur tel que défini à l'une des revendications 2 à 7, dans lequel lesdits moyens de rinçage (16) peuvent être connectés de façon fonctionnelle par lesdits moyens sélecteurs (24) auxdits moyens (16) d'introduction des échantillons et auxdits moyens (84) d'aspiration des échantillons du récipient d'échantillon ouvert, lesdits moyens de rinçage (16) étant actionnables lors d'une telle connexion après l'aspiration des échantillons dans ledit récipient d'échantillon ouvert (88) pour faire s'écouler une solution de rinçage à travers lesdits moyens (16) d'introduction des échantillons et lesdits moyens (84) d'aspiration des échantillons du récipient d'échantillon ouvert à l'encontre de la direction de l'écoulement à travers eux des échantillons aspirés, réalisant ainsi un rinçage à contre-courant desdits moyens (16) d'introduction des échantillons et des moyens (84) d'aspiration des échantillons du récipient d'échantillon ouvert pour en éliminer le résidu des échantillons aspirés.

9. Appareil échantillonneur tel que défini à l'une des revendications 4 à 8, dans lequel lesdits moyens (16) d'introduction des échantillons sont en outre actionnables pour faire s'écouler ladite solution de rinçage à partir d'eux et à partir desdits moyens (84) d'aspiration des échantillons du récipient d'échantillon ouvert, dans la direction de l'écoulement à travers eux des échantillons aspirés, rinçant ainsi lesdits moyens (16) d'introduction des échantillons et lesdits moyens (84) d'aspiration des échantillons du récipient d'échantillon ouvert, pour en éliminer le résidu des échantillons aspirés.

10. Appareil échantillonneur tel que défini a l'une des revendications 4 à 9, dans lequel lesdits moyens (84) d'aspiration des échantillons du récipient d'échantillon ouvert comprennent une sonde (84), et dans lequel lesdits moyens de rinçage (16) comprennent en outre des moyens associés de façon fonctionnelle à ladite sonde (84) et actionnables pour rincer l'extérieur de celle-ci pour en éliminer le résidu des échantillons aspirés.

11. Procédé d'échantillonnage pour l'introduction d'échantillons dans un appareil d'analyse d'échantillons grâce a l'utilisation d'appareils échantillonneurs qui comprennent un échantillonneur a tube fermé, un échantillonneur à tube ouvert, et des moyens de rinçage des échantillonneurs, comprenant les étapes consistant à choisir entre ledit échantillonneur à tube fermé et ledit échantillonneur à tube ouvert pour introduire les échantillons dans ledit appareil d'analyse des échantillons, et à choisir entre ledit échantillonneur à tube fermé et ledit échantillonneur à tube ouvert pour le rinçage ultérieur par lesdits moyens de rinçage des échantillonneurs afin d'en éliminer le résidu d'échantillon.

12. Procédé selon la revendication 11, dans lequel ledit appareil échantillonneur comprend des moyens de division de l'échantillon, et ledit procédé comprend en outre les étapes consistant à diviser ledit échantillon en quantités d'échantillon séparées, à introduire lesdites quantités d'échantillon séparées en vue d'analyses indépendantes des quantités d'échantillon, et à rincer lesdits moyens de division de l'échantillon pour en éliminer le résidu d'échantillon.

13. Procédé tel que défini à l'une des revendications 11 ou 12, d'introduction d'un échantillon à partir d'un récipient d'échantillon fermé par l'introduction dans celui-ci de moyens d'aspiration de l'échantillon, ledit procédé comprenant en outre les étapes consistant à égaliser la pression dans ledit récipient d'échantillon fermé avec la pression atmosphérique ambiante avant l'aspiration de l'échantillon hors de celui-ci, empêchant ainsi l'accumulation de vide dans ledit récipient d'échantillon fermé.

14. Procédé tel que défini aux revendications 11, 12 ou 13, d'introduction d'un échantillon à partir d'un récipient d'échantillon fermé par l'introduction dans celui-ci de moyens d'aspiration de l'échantillon pour en retirer ledit échantillon, puis le retrait desdits moyens d'aspiration de l'échantillon hors dudit récipient d'échantillon fermé, ledit procédé comprenant en outre les étapes consistant à faire s'écouler une solution de rinçage a travers lesdits moyens d'aspiration de l'échantillon à l'encontre de la direction de l'écoulement à travers eux de l'échantillon aspiré, réalisant ainsi un rinçage à contrecourant desdits moyens d'aspiration de l'échantillon pour en éliminer le résidu de l'échantillon aspiré, puis à faire s'écouler ladite solution de rinçage à travers lesdits moyens d'aspiration de l'échantillon dans la direction de l'écoulement à travers eux de l'échantillon aspiré, réalisant ainsi un rinçage desdits moyens d'aspiration de l'échantillon pour en éliminer le résidu de l'échantillon aspiré, puis à faire s'écouler de l'air atmosphérique ambiant à travers lesdits moyens d'aspiration de l'échantillon, séchant ainsi à l'air ces derniers pour en achever le nettoyage.

15. Procédé selon l'une des revendications 13 ou 14, dans lequel lesdits moyens d'aspiration de l'échantillon comprennent une aiguille d'échantillonnage, et dans lequel l'étape de rinçage à contre-courant de ladite aiguille d'échantillonnage par ladite solution de rinçage comprend en outre l'étape consistant a faire s'écouler ladite solution de rinçage à partir de l'intérieur de ladite aiguille d'échantillonnage autour de l'extérieur de celle-ci, enlevant par là le résidu de l'échantillon aspiré à la fois de l'intérieur et de l'extérieur de ladite aiguille d'échantillonnage.

16. Procédé tel que défini à l'une des revendications 11 ou 12 d'introduction d'un échantillon à partir d'un récipient d'échantillon ouvert par l'introduction dans celui-ci de moyens d'aspiration de l'échantillon pour en retirer ledit échantillon, et le retrait ultérieur desdits moyens d'aspiration de l'échantillon hors dudit récipient d'échantillon ouvert, ledit procédé comprenant en outre les étapes consistant à faire s'écouler une solution de rinçage à travers lesdits moyens d'aspiration de l'échantillon dans la direction de l'écoulement à travers eux de l'échantillon aspiré, rinçant ainsi lesdits moyens d'aspiration de l'échantillon pour en éliminer le résidu de l'échantillon aspiré, puis à faire s'écouler une solution de rinçage à travers lesdits moyens d'aspiration de l'échantillon à l'encontre de la direction de l'écoulement à travers eux de l'échantillon aspiré, réalisant ainsi un rinçage à contrecourant desdits moyens d'aspiration de l'échantillon pour en éliminer le résidu de l'échantillon aspiré.

17. Procédé selon la revendication 16, dans lequel lesdits moyens d'aspiration de l'échantillon comprennent une sonde, ledit procédé comprenant en outre les étapes consistant à faire s'écouler ultérieurement une solution de rinçage à travers lesdits moyens d'aspiration de l'échantillon dans la direction de l'écoulement à travers eux de l'échantillon aspiré, rinçant ainsi lesdits moyens d'aspiration de l'échantillon pour en éliminer le résidu de l'échantillon aspiré, et le rinçage à contrecourant de ladite sonde comprend l'écoulement de ladite solution de rinçage à travers l'intérieur de ladite sonde, et ledit procédé comprend en outre les étapes consistant à rincer l'extérieur de ladite sonde pour en éliminer le résidu de l'échantillon aspiré, puis à faire s'écouler de l'air atmosphérique ambiant à travers lesdits moyens d'aspiration de l'échantillon et autour de l'extérieur de ladite sonde, séchant ainsi à l'air cette dernière pour en achever le nettoyage.

18. Procédé tel que défini à l'une des revendications 16 ou 17, dans lequel l'étape consistant à faire s'écouler ladite solution de rinçage à travers lesdits moyens d'aspiration de l'échantillon dans la direction de l'écoulement à travers eux de l'échantillon aspiré pour rincer ces derniers comprend en outre les étapes consistant à mélanger de l'air atmosphérique ambiant avec ladite solution de rinçage en vue d'un écoulement à travers lesdits moyens d'aspiration de l'échantillon, augmentant ainsi l'efficacité de l'élimination hors de ceux-ci du résidu de l'échantillon aspiré.

## Ansprüche

1. Probenentnahmevorrichtung für die Zuführung von Proben zu einer Probenanalysevorrichtung mit einem geschlossenen Probenentnahmerohr (12), einem offenen Probenentnahmerohr (14) und Probenfördermitteln (I6), die funktionell dem geschlossenen Probenentnehmerrohr (12) und dem offenen Probenentnehmerrohr (I4) zugeordnet und zu betätigen sind, um ihnen von den Probenentnehmern (13,14) zugeführte Proben der Probenanalysevorrichtung (22) zuzuführen und weiter mit Selektionsventilmitteln (20), die funktionell dem geschlossenen Probenentnehmerrohr (12), dem offenen Probenentnehmerrohr (14) bzw. den Probenfördermitteln (16) zugeordnet und zu betätigen sind, um zwischen dem geschlossenen Probenentnehmerrohr (12) und dem offenen Probenentnehmerrohr (14) für die Zuweisung von Proben zu den Probenfördermitteln (16) auszuwählen.

2. Probenentnahmevorrichtung gemäß Anspruch 1, die ferner Auswaschmittel (16) enthält, die funktionell dem geschlossenen Probenentnehmerrohr (12), dem offenen Probenentnehmerrohr (14), den Probenfördermitteln (16) bzw. den Selektionsventilmitteln (20) zugeordnet und zu betätigen sind, um das geschlossene Probenentnehmerrohr (12), das offene Probenentnehmerrohr (14) und die Probenfördermittel (16) auszuwaschen, wobei die Selektionsventilmittel (20) ferner zu betätigen sind, um zwischen dem geschlossenen Probenentnehmerrohr (12) und dem offenen Probenentnehmerrohr (14) zum Auswaschen mittels der Auswaschenmittel (16) auszuwählen.

3. Probenentnahmevorrichtung gemäß Anspruch 1 oder 2, die ferner Mittel (18) enthält, die funktionell den Probenfördermitteln (16) und den Auswaschmitteln (16) zugeordnet und zu betätigen sind, um Proben, die ihnen von den Probenfördermitteln (16) zugeführt worden sind, in separate Probenmengen zu voneinander unabhängigen Probenmengenanalysen zu unterteilen, wobei die Auswaschmittel (16) zu betätigen sind, um die Probenunterteilungsmittel (18) abhängig vom Auswaschen der Probenfördermittel (16) auszuwaschen.

4. Probenentnahmevorrichtung gemäß Anspruch 1, 2 oder 3, die Mittel zum Fördern von Proben aus einem geschlossenen Probenbehälter (34) durch Einführen von Probenansaugmitteln (40) in den Behälter einschließt, wobei die Probenfördermittel (16) Mittel einschließen, die funktionell den Probenansaugmitteln (40) zugeordnet und nach dem Einbringen der Probenansaugmittel (40) in den Probenbehälter (34) zu betätigen sind, um vor dem Ansaugen von Proben den Druck im Probenbehälter (34) mit dem atmosphärischen Umgebungsdruck auszugleichen, dabei jedoch die Ausbildung eines Vakuums im geschlossenen Probenbehälter (34) nach dem Ansaugen von Proben zu verhindern, wobei die Druckausgleichsmittel eine Druckausgleichskammer (108) einschließen, die funktionell mit den Probenansaugmitteln (40) verbunden ist, wobei die Probenentnahmevorrichtung weiter Mittel zum Fördern von Proben aus einem offenen Probenbehälter (88) durch Einführen von Probenansaugmitteln (84) in den offenen Probenbehälter und Selektionsmittel (20) einschließt, wobei Selektionsmittel funktionell dem geschlossenen und dem offenen Probenbehälter und den Probenfördermitteln (16) zugeordnet und zu betätigen sind, um zwischen den Behältern auszuwählen und dem ausgewählten Behälter von der Probenentnahmevorrichtung entnommene Proben zuzuführen.

5. Probenentnahmevorrichtung gemäß einem der Ansprüche 2 - 4, die weiter Mittel (54) zum Entfernen der Probenansaugmittel (40) vom geschlossenen Probenbehälter (34) anschließend an das Ansaugen von Proben einschließt, wobei die Auswaschmittel (16) funktionell mit den Probenfördermitteln (16) verbunden und nach dem Entfernen der Probenansaugmittel (40) vom geschlossenen Probenbehälter (34) nach dem Ansaugen der Proben zu betätigen sind, so daß eine Auswaschmittellösung durch die Probenfördermittel (16) und die Probenansaugmittel (40) entgegen der Richtung des Durchströmens von angesaugten Proben geführt wird, um dabei durch das Rückströmen durch die Probenfördermittel (16) und die Probenansaugmittel (40) aus ihnen angesaugte Probenreste zu entfernen, wobei die Probenansaugmittel (40) eine Probenentnahmenadel (41) enthalten und die Auswaschmittel (16) zu betätigen sind, um die Auswaschmittellösung durch das Innere der Probenentnahmenadel (41) und um deren Äußeres zu fördern und so Probenreste aus dem Inneren und vom Äußeren der Probenentnahmenadel (41) zu entfernen, wobei die Probenentnahmenadel für das Durchströmen der Auswaschmittellösung durch die Nadel im wesentlichen vertikal ausgerichtet ist.

6. Probenentnahmevorrichtung gemäß einem der Ansprüche 4 und 5, bei der die Probenfördermittel (16) weiterhin zu betätigen sind, um das Abströmen der Auswaschmittellösung von diesen und den Probenansaugmitteln (40) in der Richtung zu bewirken, in der die angesaugten Proben gefördert werden, um angesaugte Probenreste von den Probenfördermitteln (16) und den Probenansaugmitteln (40) zu entfernen.

7. Probenentnahmevorrichtung nach einem der Ansprüche 4 - 6, bei der der Behälter (34) einen im wesentlichen scheibenförmigen Verschluß (38) enthält, der den Behälter (34) verschließt und bei der die Probenentnahmenadel (41) zu betätigen ist, um den Verschluß (38) zum Absaugen aus dem Behälter (34) zu durchdringen, wobei die Probenentnahmenadel (41) außermittig dem Behälterverschluß (38) zugeordnet ist und nicht das Zentrum des des Behälterverschlusses (38) durchdringt, wenn die Probenabsaugung aus dem Behälter erfolgt.

8. Probenentnahmevorrichtung gemäß einem der Ansprüche 2 - 7, bei der die Auswaschmittel (16) mittels des Selektionsmittels (24) wirkungsmäßig mit der Probenzuführung (16) zu dem offenen Probenbehälter und den Probenansaugmitteln (84) verbunden sind, wobei die Auswaschmittel (16) nach einer solchen Verbindung auf die Probenansaugung aus dem offenen Behälter (88) folgend durch die Zuführungen (16) zum offenen Probenbehälter und dem Probenansaugmittel (84) entgegen der Richtung des Stromes der angesaugten Proben fördern, um dabei im Rückströmen durch die Zuführungen (16) zum offenen Probebehälter (16) und die Probenansaugmittel (84) angesaugte Probenreste zu entfernen.

9. Probenentnahmevorrichtung nach einem der Ansprüche 4 - 8, bei der die Probenfördermittel (16) ferner zu betätigen sind, um die Auswaschmittellösung davon und vom Probenansaugmittel (84) des offenen Probenbehälters in der Durchströmrichtung des angesaugten Probenstroms abströmen zu lassen, um dabei durch Spülen der Probenzuführungen (16) und der Ansaugmittel (84) des offenen Probebehälters hiervon angesaugte Probenreste zu entfernen.

10. Probenentnahmevorrichtung nach einem der Ansprüche 4 - 9, bei der die Probenansaugmittel (84) des offenen Probenbehälters eine Probe (84) enthalten und bei der die Auswaschmittel (16) weitere Mittel enthalten, die wirkungsmäßig der Probe (84) zugeordnet sind und zu betätigen sind, um deren Äußeres zu spülen, um angesaugte Probenreste wieder zu entfernen.

11. Probenentnahmeverfahren für die Zuführung bzw. Förderung von Proben zu einer Probenanalysenvorrichtung unter Verwendung von Probenentnahmevorrichtungen, die ein geschlossenes Probenentnahmerohr, ein offenes Probenentnahmerohr und ein Probenentnehmerauswaschmittel enthalten und mit den Verfahrensschritten des Auswählens zwischen dem geschlossenen Probenentnehmerrohr und dem offenen Probenentnehmerrohr für die Probenzuführung zur Probenanalysevorrichtung und des Auswählens zwischen dem geschlossenen Probenentnehmerrohr und dem offenen Probenentnehmerrohr für anschließendes Auswaschen mittels Probenentnehmerauswaschmittel, um Probenreste aus der Vorrichtung auszuwaschen.

12. Verfahren gemäß Anspruch 11, bei dem die Probenentnahmevorrichtungen Probenteilungsmittel einschließen und das Verfahren ferner einschließt die Verfahrensschritte des Teilens der Probe in separate Probenteilmengen, des Zuführens der separaten Probenteilmengen zu Probenanalysen der voneinander unabhängigen Probenteilmengen und das Auswaschen der Probenteilungmittel, um Probenreste daraus zu entfernen.

13. Verfahren gemäß Anspruch 11 oder 12 für die Förderung einer Probe aus einem geschlossenen Probenbehälter durch Einführen von Probenansaugmitteln in den Probenbehälter, wobei das Verfahren ferner einschließt die Verfahrens-schritte des Ausgleichens des Druckes in dem geschlossenen Probenbehälter mit dem umgebenden Atmosphärendruck vor der Entnahme von Proben aus dem Probenbehälter, um dabei jedoch eine Vakuumausbildung im geschlossenen Probenbehälter zu verhindern.

14. Verfahren gemäß den 11, 12 oder 13 mit dem Entnehmen einer Probe aus einem geschlossenen Probenbehälter durch Einführen von Probenansaugmitteln in den Probenbehälter, um die Probe daraus abzusaugen, wobei das Verfahren weiterhin die Verfahrensschritte enthält: Durchströmen eines Auswaschmittels durch die Probenansaugmittel entgegen der Richtung der Strömung der angesaugten Probe durch das Ansaugmittel, um hieraus angesaugte Probenreste zu entfernen; anschließendes Strömen des Auswaschmittels durch die Probenansaugmittel in der Richtung der Strömungsrichtung der angesaugten Probe, um dabei die Probenansaugmittel zu spülen und angesaugte Probenreste hieraus zu entfernen; anschließendes Strömen von atmosphärischer Umgebungsluft durch die Probenansaugmittel, um ihre Reinigung durch Lufttrocknung abzuschließen.

15. Verfahren nach Anspruch 13 oder 14, bei dem die Probenansaugmittel eine Probenentnahmenadel enthalten und bei dem der Verfahrensschritt des Rückströmens von Auswaschmittel durch die Probenentnahmenadel den weiteren Verfahrensschritt einschließt, daß das Auswaschmittel die Probenentnahmenadel innerlich und äußerlich bespült, um dabei angesaugte Probenreste (-rückstände) innerlich aus und äußerlich von der Probenentnahmenadel zu entfernen.

16. Verfahren nach Anspruch 11 oder 12 mit dem Entnehmen einer Probe aus einem offenen Probenbehälter durch Einführen von Probenansaugmitteln in den Behälter, um aus ihm die Probe durch Ansaugen zu entnehmen, mit anschließendem Entfernen der Probenansaugmittel vom offenen Probenbehälter und mit den Verfahrensschritten des Durchströmens eines Auswaschmittels durch die Probenansaugmittel in der Richtung der Strömung der angesaugten Probe durch die Probenansaugmittel, um dabei die Probenansaugmittel zu spülen und daraus angesaugte Probenreste zu entfernen und des anschließenden Strömens eines Auswaschmittels durch die Probenansaugmittel entgegen der Richtung der Strömung der angesaugten Probe hindurch, um dabei die Probenansaugmittel rückzuspülen und angesaugte Probenreste daraus zu entfernen.

17. Verfahren nach Anspruch 16, bei dem die Probenansaugmittel eine Sonde enthalten und das Verfahren die weiteren Verfahrensschritte enthält, daß anschließend an das Ansaugen einer Probe ein Ausspülmittel durch ein Probenansaugmittel in der Richtung strömt, in der die Probe angesaugt wurde, um die Probenansaugmittel zu spülen und angesaugte Probenreste zu entfernen, daß anschließend die Sonde rückgespült wird und dieses Rückspulen ein Durchströmen der Sonde mit dem Auswaschmittel einschließt, wobei das Verfahren weiterhin die Verfahrensschritte einschließt, daß das Sondenäußere gespült wird, um davon angesaugte Probenreste zu entfernen, worauf atmosphärische Umgebungsluft durch die Probenansaugmittel und um die Sonde strömt, um dort deren Reinigung durch Lufttrocknung abzuschließen.

18. Verfahren nach Anspruch 16 oder 17, mit dem Verfahrens-schritt des Strömens eines Auswaschmittels durch die Probenansaugmittel in der Strömungsrichtung für die angesaugte Probe, um die Probenansaugmittel zu spülen und mit dem weiteren Verfahrensschritt des Mischens von atmosphärischer Umgebungsluft mit dem Auswaschmittel zum Durchströmen durch die Probenansaugmittel, um damit die Wirksamkeit des Entfernens von angesaugten Probenresten zu erhöhen.

FIG. 1

**FIG. 2**

FIG. 4

FIG. 3

FIG. 5

FIG.6